# EUROPÄISCHE PATENTSCHRIFT

(11) **EP 1 366 883 B1**
(45) Veröffentlichungstag und Bekanntmachung des Hinweises auf die Patenterteilung: **17.05.2006**
(21) Anmeldenummer: 03006326.7
(22) Anmeldetag: 20.03.2003
(51) Int. Cl.: B29C 45/27, H05B 3/06

(54) **Anordnung der Heizvorrichtung für einen Heisskanalverteiler in einem Spritzgiesswerkzeug zur Verarbeitung plastischer Massen, insbesondere Kunststoff-Spritzgiesswerkzeug**
Layout of the heating means of a hot-runner manifold in an injection mould for materials in platic state, especially injection mould for plastics
Arrangement des moyens de chauffage d'un distributeur à canaux chauds dans un moule d'injection pour matières à l'état plastique, notamment moule d'injection de résines plastiques

(30) Priorität: 29.05.2002 DE 10224254
(43) Veröffentlichungstag der Anmeldung: 03.12.2003
(73) Patentinhaber: SFR Formenbau GmbH, 72770 Reutlingen (DE)
(72) Erfinder: Reinl, Horst, 72793 Pfullingen (DE)
(74) Vertreter: Ostriga, Sonnet, Wirths & Roche

(56) Entgegenhaltungen:
- WO-A-99/20451
- NL-A- 9 000 365
- US-A- 5 225 662
- US-A- 5 539 857
- PATENT ABSTRACTS OF JAPAN vol. 017, no. 479 (M-1471), 31. August 1993 (1993-08-31) & JP 05 116184 A (SONY CORP), 14. Mai 1993 (1993-05-14)
- PATENT ABSTRACTS OF JAPAN vol. 014, no. 501 (M-1043), 2. November 1990 (1990-11-02) & JP 02 206523 A (COPAL CO LTD), 16. August 1990 (1990-08-16)

## Beschreibung

Die Erfindung betrifft ein Spritzgießwerkzeug zur Verarbeitung plastischer Massen, insbesondere Kunststoff-Spritzgießwerkzeug, entsprechend dem Oberbegriff des Anspruchs 1.

Ein solches Spritzgießwerkzeug ist beispielsweise in der Firmenschrift der Reihe "Technische Kunststoffe Berechnen - Gestalten - Anwenden C.2.1" der HOECHST AG, Frankfurt a. Main (DE), erschienen 1981 (s. dort Seiten 18 und 19) dargestellt.

Zur Beheizung eines Heißkanalblockes gelangen vornehmlich alternativ Heizpatronen oder Rohrheizkörper zur Anwendung.

Für den Fall, dass ein Heißkanalblock wegen eines nur mit engen Temperaturtoleranzen zu verarbeitenden Kunststoffes besonders gleichmäßig beheizt werden muss, werden Rohrheizkörper verwendet, für welche an mindestens einer Hauptfläche bzw. Breitfläche, eines Heißkanalblockes eine Aufnahmenut eingelassen ist. Der Längsverlauf der Aufnahmenut folgt hierbei in etwa der Kontur des in seiner Grundform beispielsweise kreisförmigen, kreuzförmigen, H-förmigen oder T-förmigen Heißkanalblockes. Der Rohrheizkörper ist in der Aufnahmenut entweder mittels eines metallhaltigen Wärmeleitzements oder in aufwendiger Weise mit einer Kupferlegierung vergossen.

Der Rohrheizkörper selbst weist regelmäßig einen kreisrunden oder abgeflacht elliptischen Rohrquerschnitt auf. Der Rohrmantel besteht zweckmäßig aus rostfreiem Stahl. Der Innenraum des Rohrheizkörpers enthält innerhalb einer Magnesiumoxid-Pulver-Einbettung mindestens eine Heizwendel aus einem Heizleiter-Werkstoff. Das Magnesiumoxid-Pulver wird mechanisch verdichtet und distanziert auf diese Weise die Heizwendel von der Rohrmäntel-Innenfläche.

Eine hinreichende Verdichtung der Magnesiumoxid-Einbettung ist insofern auch besonders wichtig, weil die Wärmeübertragung von der Heizwendel auf den Rohrmantel verbessert wird und die Heizwendel im übrigen durch die Verdichtung der Magnesiumoxid-Einbettung gegen durch Netzfrequenz eingeleitete schädliche Schwingungen weitestgehend geschützt wird.

Die zeit- und herstellungsaufwendige Fertigung der mit Rohrheizkörpern bestückten Heißkanäle gemäß der vorerwähnten Firmenschrift von HOECHST wird gemäß der DE 39 35 856 C1 vermieden. Während beim eingangs beschriebenen bekannten Heißkanal der Rohrheizkörper mittels eines besonderen Haltemittels in Gestalt eines Wärmeleitzements oder in Gestalt einer Kupferlegierung in der Aufnahmenut befestigt ist, wird beim Spritzgießwerkzeug gemäß der DE 39 35 856 C1 der Querschnitt der Aufnahmenut des Heißkanalblockes hinterschnitten ausgebildet, der Rohrheizkörper innerhalb der Aufnahmenut verpresst und seine hierbei verformte Rohrwand durch die Nut-Hinterschneidungsfläche an den Nutgrund angeschmiegt und angepresst gehalten.

Bei einem anderen Spritzgießwerkzeug gemäß der DE 101 38 599 A1 wird der Rohrheizkörper zwar ebenfalls innerhalb der Aufnahmenut verpresst, jedoch wird der verpresste Rohrheizkörper benachbart der Nutöffnung mittels plattenförmiger Kupferteile unter Zuhilfenahme einer Presse oder eines Hammers in der Aufnahmenut verkeilt.

Von der WO 99/20451 ist es bekannt, den Rohrheizkörper durch eine Aufnahmebohrung eines länglichen Kupfer- oder Messingkörpers hindurchzustecken und letzteren, gewissermaßen analog zur DE 39 35 856 C1, unter plastischer Verformung in die hinterschnittene Aufnahmenut des Heißkanalblocks unlösbar hineinzupressen.

Von einer nicht zu engeren Gattung zählenden DE 693 08 711 T2 schließlich ist es in Verbindung mit einer Einspritzdüse für Kunststoff-Spritzgießwerkzeuge bekannt, eine etwa manschettenartig angeordnete Heizwendel in dem Ringraum zwischen zwei einander koaxialen Röhren anzuordnen, von denen die äußere aus einem Metall von relativ geringer Wärmeausdehnung (z.B. aus Titan) und die innere, als Schlitzrohr ausgebildete Röhre, aus einem Werkstoff mit verhältnismäßig großer Wärmeausdehnung, wie z.B. aus Kupfer, besteht. Sobald die Heizwendel erhitzt wird, presst sich das ausdehnende Schlitzrohr mit seiner Außenmantelfläche gegen die Heizmanschette an der Innenmantelfläche des äußeren Rohres.

Das Spritzgießwerkzeug gemäß der DE 39 35 856 C1 hat sich in der Praxis umfangreich bewährt. Indessen ist dort bei Reparaturfällen eine einfachere Auswechselbarkeit des Heizkörpers wünschenswert. Ein solcher Reparaturfall tritt z.B. ein bei einem Durchbrennen der Heizwendel oder bei Schmelzeleckagen, die zu einer Funktionsbeeinträchtigung des Heißkanals führen. In solchen Fällen muss der Heißkanal zum Hersteller verschickt, der Rohrheizkörper unter Zuhilfenahme von Spezialwerkzeugen entnommen und durch einen neuen Rohrheizkörper ersetzt werden. Diese Verfahrensweise gilt grundsätzlich ebenfalls für das eingangs beschriebene Spritzgießwerkzeug gemäß der Firmenschrift HOECHST.

Aus der US 5,539,857 ist ein Heißkanalblock bekannt, bei dem der Heizkörper mittels eines geteilten Einpresskörpers innerhalb einer in dem Heizkanalblock vorgesehenen Aufnahmenut angeordnet ist. Im zusammengesetzten Zustand der beiden Hälften des Einpresskörpers wird eine zylindrische Ausnehmung gebildet, in welcher der Heizkörper aufgenommen ist. Der Einpresskörper wird aufgrund des vorgesehenen Passsitzes durch Verpressen in die Aufnahmenut eingefügt. Deformationen, beispielsweise in Form von Einkerbungen des Randbereichs der Aufnahmenut verhindern, dass sich der Einpresskörper aus der Aufnahmenut bewegt, was beispielsweise durch Verspannungen, die durch das Einpressen hervorgerufen werden, der Fall sein kann. Auf diese Weise kann der Einpresskörper beispielsweise im Falle einer Leckage, bei der Kunststoff in die Aufnahmenut gelangt oder im Falle eines Defekts des Heizkörpers aus dem Heißkanalblock entfernt werden, dieses ist aber aufgrund der Einpressung nur mit erheblichem Aufwand möglich. Zudem ist auch das Einsetzen des Körpers aufgrund des engen Passsitzes sehr schwierig.

Ausgehend von der Anordnung gemäß der US 5,539,857, gemäß welcher der durch die Firmenschrift HOECHST aus Wärmeleitzement bestehende Haltekörper bereits durch einen zweiteiligen Kupferkörper mit gegenüber dem stählernen Heizkanalblock größerer Wärmedehnung ersetzt ist und welcher im kalten Zustand der Anordnung mit enger Passung in die Aufnahmenut eingefügt und somit schwergängig einzusetzen ist, liegt der Erfindung die Aufgabe zugrunde, ein Spritzgießwerkzeug mit einem Heißkanalblock zu schaffen, dessen Heizkörper wesentlich einfacherer als bisher auszuwechseln ist und bei dem die Möglichkeit besteht, durch die Anordnung des Heizkörpers den Wärmeübergang bzw. den Wärmedurchgang vom Heizkörper zum Heißkanalblock zu beeinflussen.

Gemeinsam mit den Merkmalen des Oberbegriffs des Anspruchs 1 wird diese Aufgabe durch die Merkmale des Kennzeichenteils des Anspruchs 1 entsprechend der Erfindung dadurch gelöst, dass das Haltemittel von mindestens einem sich entlang der Aufnahmenut erstreckenden, bezüglich des Heißkanalblocks separaten metallischen starren Körper gebildet ist, welcher mit seiner Innenmantelfläche einen Aufnahmekanal bildet, in welchen der Heizkörper einsetzbar ist, oder welcher mit seinem Aufnahmekanal um das Heizelement anzuordnen ist, wobei sich der starre Körper bei Erwärmung durch den Heizkörper lateral dehnt und sich dabei mit seiner Außenmantelfläche an die Nutfläche, einen Spalt schließend, anlegt, und wobei Befestigungsmittel zur Festlegung des starren Körpers in der Aufnahmenut vorgesehen sind.

Wesentlich bei der Erfindung ist ein bezüglich des Heißkanalblocks separater metallischer starrer Körper, welcher mit seiner Innenmantelfläche einen Aufnahmekanal bildet, in welchen der Heizkörper einsetzbar ist. Das Metall, aus welchem der starre Körper gebildet ist, weist eine derartige Wärmeausdehnung auf, dass sich der starre Körper bei Erwärmung durch den Heizkörper lateral dehnt und sich dabei mit seiner Außenmantelfläche an die Nutfläche anlegt.

Dabei ist wesentlich, daß der starre Körper eine größere, insbesondere eine wesentlich größere, Wärmeausdehnung als der in der Regel aus Stahl bestehende Heißkanalblock aufweist.

Grundsätzlich kann der starre Körper ein stoffschlüssig zusammenhängendes Bauteil sein, in welches der Heizkörper einsetzbar ist, oder aber der starre Körper kann aus mehreren Elementen bzw. Teilkörpern bestehen, welche um den Heizkörper herum anzuordnen sind.

Sobald der starre Körper erkaltet ist, entfernt sich dessen Außenmantelfläche von der Innenmantelfläche der Aufnahmenut, so dass eine Demontage und eine erneute Montage des den Heizkörper in seinem Aufnahmekanal aufnehmenden einteiligen oder mehrteiligen starren Körpers leichtgängig durchzuführen sind.

Die Querschnittskontur der Aufnahmenut kann in vorteilhafter Weise bezüglich der Querschnittskontur des starren Körpers geringfügig hinterschnitten sein, derart, dass der den Heizkörper enthaltende starre Körper beim Einsetzen etwa parallel zur Längsachse der Aufnahmenut in letzterer schnappverrastend oder durch Klemmschluss festgelegt ist. Dabei kann das Einsetzen mit einem Presswerkzeug oder mit einem Hammer erfolgen. In einem solchen Falle werden also die Befestigungsmittel zur Festlegung des starren Körpers in der Aufnahmenut durch die Konfiguration der Querschnittskontur der Aufnahmenut und der Querschnittskontur des starren Körpers selbst gebildet.

Für den Fall jedoch, dass die Querschnittskontur der Aufnahmenut bezüglich der Querschnittskontur des starren Körpers hinterschneidungsfrei ist, sind gesonderte und insbesondere lösbare Befestigungsmittel zur Festlegung des starren Körpers in der Aufnahmenut vorgesehen.

Diese Befestigungsmittel können beispielsweise dadurch verwirklicht werden, dass der starre Körper mittels kerbenartig verformter Bereiche der Nutwände der Aufnahmenut oder mittels im Heißkanalblock angeordneter Stiftschrauben in der Aufnahmenut gehalten ist. Auch ist es in weiterer Ausgestaltung der Erfindung vorgesehen, dass der starre Körper mittels einer die benachbarte Hauptfläche des Heißkanalblocks übergreifenden Abdeckplatte in der Aufnahmenut gehalten wird.

Ein guter Wärmedurchgang bzw. Wärmeübergang vom starren Körper zum Heißkanalblock wird erfindungsgemäß dadurch erreicht, dass die Querschnittskontur des starren Körpers der Querschnittskontur der Nutfläche im wesentlichen ähnlich ist, wobei "ähnlich" im mathematischen Sinne zu verstehen ist. Dies bedeutet zugleich, dass sich der starre Körper bei seiner Wärmeausdehnung satt an die Innenfläche der Aufnahmenut anlegen kann.

Eine zweckmäßige Querschnittskonfiguration, die für eine derartige satte Anlage besonders günstig ist und sowohl für einteilige als auch mehrteilige starre Körper geeignet ist, besteht in besonderer Ausgestaltung der Erfindung darin, dass die äußere Querschnittskontur des starren Körpers in ihrem dem Boden der Aufnahmenut benachbarten Bereich eine Rundung aufweist, an welche sich beiderseits je eine senkrecht zur benachbarten Hauptfläche des Heißkanals verlaufende Gerade anschließt. Zweckmäßig ist dabei die Rundung ein Halbkreis.

In der Praxis kann es auch erwünscht sein, den Wärmeübergang bzw. den Wärmedurchgang vom Heizkörper auf gesamter Länge oder nur auf Teilen der Länge der heißkanalblockseitigen Aufnahmenut zu mindern bzw. zu "bremsen". Die diesbezüglichen Erfindungsmerkmale bestehen darin, dass die äußere Querschnittskontur des starren Körpers bezüglich der Querschnittskontur der Nutfläche unterschiedlich ist.

Ein guter Wärmeübergang bzw. Wärmedurchgang vom Heizkörper zum starren Körper wird dadurch befördert, dass die äußere Querschnittskontur des Heizkörpers der Querschnittskontur des Aufnahmekanals im wesentlichen ähnlich ist.

Andererseits kann im Bedarfsfall eine Minderung des Wärmedurchgangs bzw. Wärmeübergangs vom Heizkörper zum starren Körper dadurch bewirkt werden, dass die Querschnittskontur des Heizkörpers bezüglich der Querschnittskontur des Aufnahmekanals unterschiedlich ist.

Wie bereits weiter oben erwähnt, kann der starre Körper grundsätzlich aus einzelnen starren Teilkörpern bestehen oder aber ein stoffschlüssig zusammenhängendes Bauteil darstellen.

So können Teilkörper von Axialabschnitten des starren Körpers gebildet sein. Diese als Axialabschnitte ausgebildeten Teilkörper können in Längsrichtung der Aufnahmenut unmittelbar aufeinander folgen, wenn entlang des Heizkörpers ein intensiver Wärmetausch zum Heißkanalblock erwünscht ist. Falls letzteres nicht oder partiell nicht gewünscht ist, sieht die Erfindung vor, dass als Axialabschnitte ausgebildete Teilkörper des starren Körpers in Längsrichtung der Aufnahmenut mit Axialabstand aufeinander folgen.

Andererseits ist es möglich, Teilkörper entsprechend der Erfindung so auszubilden, dass der Querschnitt des starren Körpers aus Teilquerschnitten, beispielsweise aus segmentartigen Teilquerschnitten, einzelner starrer Teilkörper zusammengesetzt ist. Dabei können die segmentartige Teilquerschnitte aufweisenden Teilkörper mit axialen Fügeflächen formschlüssig ineinandergreifen.

Ein vorteilhafter Grund, den starren Körper in axiale oder segmentartige Teilkörper aufzugliedern, kann zudem in der leichteren Montierbarkeit des Heizkörpers innerhalb des starren Körpers bestehen. So kann beispielsweise ein aus Axialabschnitten bestehender starrer Körper auf den Heizkörper "aufgefädelt" werden. Andererseits kann ein aus etwa segmentartigen bzw. schalenartigen Teilkörpern zusammenzusetzender starrer Körper lateral um den Heizkörper herum angegliedert werden.

In zusätzlicher Ausgestaltung der Erfindung weist der starre Körper in seinem der Öffnung der Nut benachbarten Bereich einen sich parallel zur Längsachse der Aufnahmenut erstreckenden Axialschlitz auf. Dieser Axialschlitz kann zum einen als Luftspalt dienen, der eine Wärmeabstrahlung des starren Körpers zur Öffnung der Aufnahmenut hin vermindert. Andererseits kann der Axialschlitz, zumal dann, wenn er in den Aufnahmekanal mündet, dazu dienen, dem insbesondere stoffschlüssig zusammenhängenden starren Körper in Tangentialrichtung, d.h. quer zur Längsachse der Aufnahmenut, wirkende Federeigenschaften zu verleihen, um den starren Körper besonders leichtgängig schnappverrastend in die Aufnahmenut einsetzen zu können.

Eine Gestaltung des Wärmeübergangs bzw. des Wärmedurchgangs kann im übrigen auch dadurch erfolgen, dass Teilkörper des starren Körpers aus Metallen unterschiedlicher Wärmeleitfähigkeit bestehen.

Weitere Erfindungsmerkmale ergeben sich aus zusätzlichen Unteransprüchen.

In den Zeichnungen sind bevorzugte Ausführungsbeispiele entsprechend der Erfindung näher dargestellt, es zeigt
Fig. 1 eine Draufsicht auf einen Heißkanalblock von im wesentlichen rechteckiger Grundform,
Fig. 2 eine Längsschnittansicht gemäß der abgeknickten Schnittlinie ll-ll in Fig. 1,
Fig. 3 eine vergrößerte Querschnittsdarstellung etwa entsprechend dem in Fig. 2 mit III bezeichneten eingekreisten Detail,
Fig. 4 einen vergrößerten Querschnitt durch eine Aufnahmenut des Heißkanalblocks,
Fig. 5 einen Querschnitt durch einen starren Körper in Alleinstellung,
Fig. 6 in Anlehnung an die Darstellung gemäß Fig. 3 eine Querschnittsanordnung mit einem einen Rohrheizkörper aufnehmenden starren Körper vor Erwärmung des Rohrheizkörpers und
Fig. 7 in Anlehnung an die Darstellung gemäß Fig. 5 eine abweichende Ausführungsform eines starren Körpers in Alleinstellung.

In den Zeichnungen ist ein Heißkanalblock mit der Bezugsziffer 10 versehen. Der Heißkanalblock 10 besteht im wesentlichen aus einer Stahl- oder aus einer NE-Metallplatte 11 von etwa rechteckiger Grundform.

Der Heißkanalblock 10 enthält eine Angussbuchse 12 zur Aufnahme einer nicht dargestellten maschinenseitigen Düse. Von der Angussbuchse 12 führen Verteilerkanäle 13, 14, 15 zu beheizten Hochleistungsdüsen 16, deren Düsenbereiche 17 jeweils an eine nicht dargestellte formplattenseitige Formhöhlung eines Spritzgießwerkzeuges anschließen.

Ein Rohrheizkörper 18 mit elektrischen Anschlusseinheiten 19 ist im Heißkanalblock 10 in folgender Weise positioniert.

Die Metallplatte 11 des Heißkanalblocks 10 ist mit einer Aufnahmenut 20 versehen. Die Aufnahmenut 20 weist einen im Querschnitt etwa halbkreisförmigen Nutboden 21 auf, an dessen beiden zur Nutöffnung 22 hin gerichteten Enden sich jeweils planebene Nutseitenwände 23 anschließen, welche zur Nutöffnung 22 hin aufeinanderzu geneigt sind. In der Praxis weist die Neigung einer jeden Nutseitenwand 23 bezüglich einer zur ebenen Breit- bzw. Hauptfläche B der Metallplatte 11 Senkrechten V einen Winkel α von etwa 1°- 3° bzw. etwa 1° - 4° auf. Auf diese Weise besitzt die Aufnahmenut 20, deren Nutfläche insgesamt mit 37 bezeichnet ist, eine geringfügige Hinterschneidung.

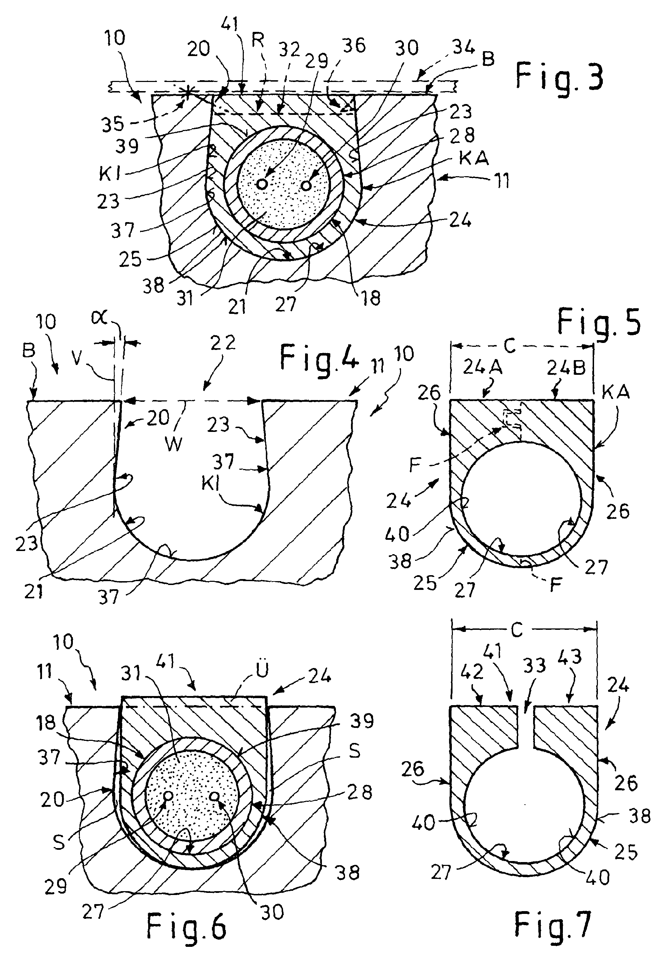

In Fig. 5 ist der Querschnitt eines starren Körpers 24 gezeigt, dessen äußere Querschnittskontur KA der inneren Querschnittskontur Kl der Aufnahmenut 20 im wesentlichen im mathematischen Sinne ähnlich ist. In ihrem dem Nutboden 21 der Aufnahmenut 20 benachbarten Bereich bildet die Querschnittskontur KA einen halbkreisförmigen Bereich 25, an welchen sich beiderseits je eine Gerade 26 anschließt. Beide Geraden 26 sind zueinander und bezüglich der Vertikalen V parallel. Die Mantelfläche des starren Körpers 24 entlang der Kontur KA ist mit 38 bezeichnet.

Der Nutboden 21 selbst ist im wesentlichen ebenfalls halbkreisförmig konturiert, weist indessen gegenüber dem halbkreisförmigen Bereich 25 einen etwas größeren Durchmesser auf.

Dabei ist die Anordnung so getroffen, dass die Weite W der Nutöffnung 22 etwa gleich der Breite C zwischen den beiden Senkrechten 26 ist.

Anhand von Fig. 6 ist es vorstellbar, dass der starre Körper 24 mit leichter Presspassung, gegebenenfalls unter Zuhilfenahme eines Hammers oder eines Presswerkzeugs, quer zur Längsrichtung der Aufnahmenut 20 in letztere eingeführt werden kann. Zugleich nimmt der Aufnahmekanal 27 des starren Körpers 24 den Rohrheizkörper 18 auf, dessen aus rostfreiem Stahl bestehende Rohrwandung mit 28 und dessen Magnesiumoxid-Pulver-Füllung bzw. - Einbettung für die Heizwendel 29, 30 mit 31 bezeichnet sind.

Sobald der Rohrheizkörper 18 erwärmt wird, erwärmt sich auch der aus wärmeleitendem Metall, wie z.B. aus Kupfer, bestehende starre Körper 24, welcher sich daraufhin gegenüber dem eine geringere Wärmeausdehnung aufweisenden Stahlkörper 11 lateral derartig ausdehnt, dass der in Fig. 4 noch vorhandene Spalt S bei Erreichen der Solltemperatur von z.B. 300° C zugunsten einer satten Anlage der Mantelfläche 38 an die Nutfläche 37 verschwindet, wie ein Vergleich der Fig. 3 und 6 miteinander zeigt. Auf diese Weise ist ein guter Wärmedurchgang bzw. Wärmeübergang vom starren Körper 24 zur Metallplatte 11 des Heißkanalblocks 10 gewährleistet. Wegen des hinterschnittenen Profils der Aufnahmenut 20 ist der starre Körper 24 zugleich innerhalb der Aufnahmenut 20 verblockt.

Bei der Erwärmung dehnt sich auch der Rohrheizkörper 18 radial aus, so dass dessen Mantelfläche 39 eng an der Innenfläche 40 des Aufnahmekanals 27 anliegt.

Mit Ausnahme der in Fig. 5 gestrichelt eingetragenen alternativen Ausführungsform des starren Körpers 24 stellt letzterer auf gesamter Länge der Aufnahmenut 20 einen einzigen stoffschlüssig zusammenhängenden Körper dar.

In den Aufnahmekanal 27 dieses zunächst sich geradlinig erstreckenden Körpers 24 wird der Rohrheizkörper 18, dessen Magnesiumoxid-Pulver-Einbettung 31 bereits vorverdichtet ist, mit Schiebesitz eingeführt, worauf die Anordnung 18, 24 entsprechend dem Längsverlauf der Aufnahmenut 20 gebogen wird. Sodann erfolgt - wie bereits beschrieben - das Einpressen der Anordnung 24, 18 in die Aufnahmenut 20 (vgl. Fig. 6). Der gegebenenfalls noch vorhandene Überstand Ü des starren Körpers 24, der durch eine Strichpunktlinie angedeutet ist, wird flachgeschliffen.

Wie anhand der gestrichelten Linie 32 gemäß Fig. 3 vorstellbar ist, kann der starre Körper 24 auch flacher ausgebildet sein, so dass sich oberhalb des starren Körpers 24 eine Rinne R bildet. Diese Rinne R stellt einen für gewisse Anwendungsfälle gewünschten isolierenden Luftspalt dar.

Anhand der gestrichelten Linien gemäß Fig. 5 ist vorstellbar, dass der starre Körper 24 entlang einer formschlüssig ineinandergreifenden Fügung F aus zwei Längsteilen zusammengesetzt sein kann. Es sind auf diese Weise zwei starre Teilkörper 24A, 24B vorhanden, die sich gegebenenfalls für das Einsetzen des Rohrheizkörpers 18 in den starren Körper 24 als günstig erweisen können.

Anhand der Darstellungen wird deutlich, dass der den Rohrheizkörper 18 enthaltende starre Körper 24 im erkalteten Zustand der Anordnung relativ leicht zu Reparaturzwecken aus der Aufnahmenut 20 herausgenommen und - nach erfolgter Reparatur - erneut eingesetzt werden kann.

Ein besonders leichtes Einsetzen des starren Körpers 24 in die Aufnahmenut 20 kann durch einen in den Aufnahmekanal 27 mündenden Schlitz 33 bewirkt werden, der im oberen Bereich 41 des starren Körpers 24 vorhanden ist (s. Fig. 7). Auf diese Weise können die beiden oberen Teilbereiche 42, 43 des starren Körpers 24 beim Einsetzen der Anordnung 18, 24 in den Aufnahmekanal 20 (vgl. Fig. 6) aufeinander zu elastisch einfedern.

Auch für den Fall, dass die Aufnahmenut 20 keine Hinterschneidung bildet, kann der starre Körper 24 sicher in der Aufnahmenut 20 gehalten werden, indem man besondere Befestigungsmittel vorsieht, die in Fig. 3 angedeutet sind.

Zum einen kann eine an sich bekannte Aluminium-Abdeckplatte 34, welche eine Wärme-Verteilplatte ist, als ein derartiges Befestigungsmittel dienen.

Statt dessen ist es auch möglich, wie ebenfalls in Fig. 3 angedeutet, Stiftschrauben 35 schräg in die Hauptfläche B hinein und durch beide Nutwände 23 hindurch zum starren Körper 24 zu führen, um diesen lösbar zu befestigen.

Insbesondere für den Fall, dass ein flacher starrer Körper 24 unterhalb der Nutöffnung 22 eine Rinne R bildet, können den starren Körper 24 zurückhaltende Einkerbungen 36 in den Nutseitenwänden 23 gebildet sein. Diese Einkerbungen 23 können im Falle einer Reparatur rasch beseitigt werden, beispielsweise mittels eines sich drehenden Schleifmittels.

Um einer Verzunderung des bevorzugt aus Kupfer hergestellten starren Körpers 24 vorzubeugen, kann es zweckmäßig sein, den starren Körper 24 auf seiner gesamten Außen- und Innenfläche mit einer chemisch aufgebrachten Nickelschicht zu versehen.

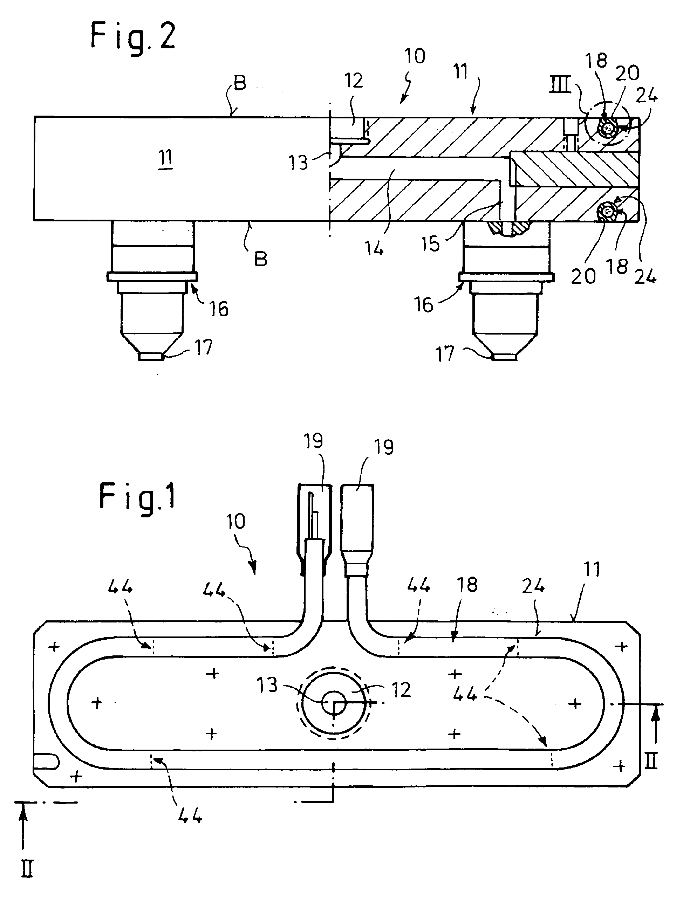

Ergänzend sei noch darauf hingewiesen, dass der starre Körper 24 entsprechend den in Fig. 1 alternativ eingetragenen und mit 44 bezeichneten gestrichelten Trennlinien in einzelne axiale Längenbereiche aufgeteilt sein kann.

## Patentansprüche

1. Spritzgießwerkzeug zur Verarbeitung plastischer Massen, insbesondere Kunststoff-Spritzgießwerkzeug, mit einem Heißkanalblock (10), der an mindestens einer Hauptfläche (B) mindestens eine Aufnahmenut (20) für jeweils mindestens einen sich entlang der Aufnahmenut (20) erstreckenden Heizkörper (18) aufweist, dem ein wärmeleitendes Haltemittel in Form eines starren Körpers (24) zugeordnet ist, welches einerseits mit seiner Außenfläche (38) an der Nutfläche (37) anliegt und welches andererseits mit seiner Innenfläche (40) am Heizkörper (18) anliegt, wobei das Haltemittel von mindestens einem sich entlang der Aufnahmenut (20) erstreckenden, bezüglich des Heißkanalblocks (10) separaten metallischen starren Körper (24) gebildet ist, welcher mit seiner Innenfläche (40) einen Aufnahmekanal (27) bildet, in welchen der Heizkörper (18) einsetzbar ist, oder welcher mit seinem Aufnahmekanal (27) um den Heizkörper (18) herum anzuordnen ist, wobei Befestigungsmittel (23, 23; 34, 35, 36) zur Festlegung des starren Körpers (24) in der Aufnahmenut (20) vorgesehen sind und wobei der starre Körper (24) eine größere Wärmeausdehnung als der Heißkanalblock aufweist und bei Erwärmung durch den Heizkörper an der Nutfläche anliegt, **dadurch gekennzeichnet, dass** der starre Körper (24) und die Aufnahmenut (20) so ausgestaltet sind, dass bei Benutzung des Spritzgießwerkzeugs bedingt durch die Erwärmung des starren Körpers, sich letzterer derartig ausdehnen kann, dass, ein im kalten Zustand der Anordnung vorhandener Spalt (S) zwischen Außenfläche (38) und der Nutfläche (37) bei Erreichen einer Solltemperatur zugunsten einer satten Anlage der Mantelfläche (38) an die Nutfläche (37) verschwindet.

2. Spritzgießwerkzeug nach Anspruch 1, **dadurch gekennzeichnet, dass** die äußere Querschnittskontur (KA) des starren Körpers (24) der Querschnittskontur (Kl) der Nutfläche (37) im wesentlichen ähnlich ist.

3. Spritzgießwerkzeug nach Anspruch 2, **dadurch gekennzeichnet, dass** die äußere Querschnittskontur (KA) des starren Körpers (24) in ihrem dem Nutboden (21) der Aufnahmenut (20) benachbarten Bereich eine Rundung (25) aufweist, an welche sich beiderseits je eine senkrecht zur benachbarten Hauptfläche (B) des Heißkanalblock (10) verlaufende Gerade (26) anschließt.

4. Spritzgießwerkzeug nach Anspruch 3, **dadurch gekennzeichnet, dass** die Rundung (25) ein Halbkreis ist.

5. Spritzgießwerkzeug nach einem der Ansprüche 1 bis 4, **dadurch gekennzeichnet, dass** die äußere Querschnittskontur (KA) des starres Körpers (24) bezüglich der Querschnittskontur (Kl) der Nutfläche (37) unterschiedlich ist.

6. Spritzgießwerkzeug nach einem der Ansprüche 1 bis 5, **dadurch gekennzeichnet, dass** die äußere Querschnittskontur (bei 39) des Heizkörpers (18) der Querschnittskontur (bei 40) des Aufnahmekanals (27) im wesentlichen ähnlich ist.

7. Spritzgießwerkzeug nach einem der Ansprüche 1 bis 4, **dadurch gekennzeichnet, dass** die Querschnittskontur (bei 39) des Heizkörpers (18) bezüglich der Querschnittskontur (bei 40) des Aufnahmekanals (27) unterschiedlich ist.

8. Spritzgießwerkzeug nach einem der Ansprüche 1 bis 7, **dadurch gekennzeichnet, dass** der starre Körper (24) aus einzelnen starren Teilkörpern (24A, 24B) besteht.

9. Spritzgießwerkzeug nach Anspruch 8, **dadurch gekennzeichnet, dass** die Teilkörper Axialabschnitte (bei 44) bilden.

10. Spritzgießwerkzeug nach Anspruch 9, **dadurch gekennzeichnet, dass** als Axialabschnitte (bei 44) ausgebildete Teilkörper in Längsrichtung der Aufnahmenut (20) unmittelbar aufeinander folgen.

11. Spritzgießwerkzeug nach Anspruch 9, dass als Axialabschnitte ausgebildete Teilkörper in Längsrichtung der Aufnahmenut (20) mit Axialabstand aufeinander folgen.

12. Spritzgießwerkzeug nach einem der Ansprüche 8 bis 11, **dadurch gekennzeichnet, dass** der Querschnitt des starren Körpers (24) aus Teilquerschnitten, beispielsweise aus segmentartigen Teilquerschnitten, einzelner starrer Teilkörper (24A, 24B) zusammengesetzt ist.

13. Spritzgießwerkzeug nach Anspruch 12, **dadurch gekennzeichnet, dass** die segmentartige Teilquerschnitte aufweisenden Teilkörper (24A, 24B) mit axialen Fügeflächen (bei F) formschlüssig ineinandergreifen.

14. Spritzgießwerkzeug nach einem der Ansprüche 1 bis 13, **dadurch gekennzeichnet, dass** der starre Körper (24) in seinem der Öffnung (22) der Aufnahmenut (20) benachbarten Bereich einen sich parallel zur Längsachse der Aufnahmenut (20) entstreckenden Axialschlitz (33) aufweist.

15. Spritzgießwerkzeug nach einem der Ansprüche 1 bis 14, **dadurch gekennzeichnet, dass** der Axialschlitz (33) in den Aufnahmekanal (27) mündet.

16. Spritzgießwerkzeug nach einem der Ansprüche 1 bis 15, **dadurch gekennzeichnet, dass** der starre Körper (24) ein stoffschlüssig zusammenhängendes Bauteil oder mehrere Teilkörper (24A, 24B) aufweist, wobei das zusammenhängende Bauteil oder die Teilkörper (24A, 24B) jeweils auf der Gesamtlänge des Heizkörpers (18) angeordnet sind.

17. Spritzgießwerkzeug nach einem der Ansprüche 1 bis 16, **dadurch gekennzeichnet, dass** der starre Körper (24) aus Kupfer oder aus einer Kupferlegierung besteht.

18. Spritzgießwerkzeug nach einem der Ansprüche 1 bis 17, **dadurch gekennzeichnet, dass** der starre Körper (24) aus Kupferberyllium, aus Bronze oder aus Messing besteht.

19. Spritzgießwerkzeug nach einem der Ansprüche 1 bis 18, **dadurch gekennzeichnet, dass** der starre Körper (24) aus Molybdän besteht.

20. Spritzgießwerkzeug nach einem der Ansprüche 8 bis 19, **dadurch gekennzeichnet, dass** Teilkörper des starren Körpers (24) aus Metallen unterschiedlicher Wärmeleitfähigkeit bestehen.

21. Spritzgießwerkzeug nach einem der Ansprüche 1 bis 20, **dadurch gekennzeichnet, dass** der Heizkörper einen elektrische Rohrheizkörper (18) bildet.

22. Spritzgießwerkzeug nach Anspruch 21, **dadurch gekennzeichnet dass** der die elektrische Heizwendel (29, 30) des Rohrheizkörpers (18) umgebende Isolierstoff, wie z.B. Magnesiumoxyd-Pulver (31), vor Einsetzen des Rohrheizkörpers (18) in den Aufnahmekanal (27) des starren Körpers (24) vorverdichtet ist.

23. Spritzgießwerkzeug nach Anspruch 21, **dadurch gekennzeichnet, dass** der die Heizwendel (29, 30) des Rohrheizkörpers (18) umgebende Isolierstoff, wie z.B. Magnesiumoxyd-Pulver (31), nach Einsetzen des Rohrheizkörpers (18) in den Aufnahmekanal (27) des starren Körpers (24) durch Reduzieren des starren Körpers, beispielsweise durch Strecken oder durch Walzen, gemeinsam mit der Reduzierung des starren Körpers (24) verdichtet wird.

24. Spritzgießwerkzeug nach einem der Ansprüche 1 bis 23, **dadurch gekennzeichnet, dass** der den Heizkörper (18) enthaltende starre Körper (24) entsprechend dem Verlauf der Aufnahmenut (20) gebogen wird.

25. Spritzgießwerkzeug nach einem der Ansprüche 1 bis 24, **dadurch gekennzeichnet, dass** die beiden Nutseitenwände (23) der Aufnahmenut (20) als Befestigungsmittel für den starren Körper (24) dienen, indem die Nutseitenwände (23) aufeinanderzu geneigt sind, so dass die Querschnittskontur (Kl) der Aufnahmenut (20) bezüglich der Querschnittskontur (KA) des starren Körpers (24) geringfügig hinterschnitten ist, derart, dass der den Heizkörper (18) enthaltende starre Körper (24) beim Einsetzen etwa parallel zur Längsachse der Aufnahmenut (20) in letzterer schnappverrastend oder durch Klemmschluss festgelegt ist.

26. Spritzgießwerkzeug nach einem der Ansprüche 1 bis 25, **dadurch gekennzeichnet, dass** nach Einsetzen des den Heizkörper (18) enthaltenden starren Körpers (24) in die Aufnahmenut (20) der starre Körper (24) mit seinem der Öffnung (22) der Aufnahmenut (20) benachbarten Bereich (41) bezüglich der benachbarten Hauptfläche (B) des Heißkanalblocks (10) mit einem Überstand (Ü) vorragt.

27. Spritzgießwerkzeug nach Anspruch 26, **dadurch gekennzeichnet, dass** der Überstand (Ü) bis zur Flächenbündigkeit mit der benachbarten Hauptfläche (B) des Heißkanalblocks (10) flachgeschliffen wird.

28. Spritzgießwerkzeug nach einem der Ansprüche 1 bis 27, **dadurch gekennzeichnet, dass** der den Rohrheizkörper (18) enthaltende starre Körper (24) mit seinem der Öffnung (22) der Aufnahmenut (20) benachbarten Bereich (41) bezüglich der benachbarten Hauptfläche (B) des Heißkanalblocks zurückgesetzt ist.

29. Spritzgießwerkzeug nach einem der Ansprüche 1 bis 28, **dadurch gekennzeichnet, dass** die Querschnittskontur (Kl) der Aufnahmenut (20) bezüglich der Querschnittskontur (KA) des starren Körpers (24) hinterschneidungsfrei ist.

30. Spritzgießwerkzeug nach Anspruch 29, **dadurch gekennzeichnet, dass** die Querschnitte von Aufnahmenut (20) und starrem Körper (24) zur Öffnung (22) der Aufnahmenut (20) hin konisch erweitert sind.

31. Spritzgießwerkzeug nach Anspruch 30, **dadurch gekennzeichnet, dass** die konische Erweiterung von Geraden begrenzt ist, welche jeweils mit einem von der Hauptfläche (B) des Heißkanalblocks (10) gefällten Lot einen Winkel von kleiner als 7° bilden.

32. Spritzgießwerkzeug nach einem der Ansprüche 1 bis 31, **dadurch gekennzeichnet, dass** der starre Körper (24) mittels kerbenartig verformter Bereiche (36) der Nutwände (23) oder mittels im Heißkanalblock (10) angeordneter Stiftschrauben (35) in der Aufnahmenut (30) gehalten ist.

33. Spritzgießwerkzeug nach einem der Ansprüche 1 bis 32, **dadurch gekennzeichnet, dass** der starre Körper (24) mittels einer die benachbarte Hauptfläche (B) des Heißkanalblocks (10) übergreifenden Abdeckplatte (34) in der Aufnahmenut (20) gehalten ist.

34. Spritzgießwerkzeug nach einem der Ansprüche 1 bis 33, **dadurch gekennzeichnet, dass** der insbesondere aus Kupfer oder aus einer Kupferlegierung bestehende starre Körper (24) chemisch vernickelt ist.

## Claims

1. An injection mould for processing plastic compositions, in particular a plastics injection mould, having a hot runner manifold block (10), which comprises at least one receiving groove (20) on at least one main face (B) for in each case at least one heater (18) extending along the receiving groove (20), with which heater there is associated a heat-conducting retaining means in the form of a rigid body (24), which rests on the one hand with its outer surface (38) against the groove surface (37) and on the other hand with its inner surface (40) against the heater (18), the retaining means taking the form of at least one metallic rigid body (24) separate relative to the hot runner manifold block (10) and extending along the receiving groove (20), which body forms with its inner surface (40) a receiving channel (27), into which the heater (18) may be inserted, or which may be arranged with its receiving channel (27) around the heater (18), fastening means (23, 23; 34, 35, 36) being provided to fix the rigid body (24) in the receiving groove (20) and the rigid body (24) exhibiting greater thermal expansion than the hot runner manifold block and resting against the groove surface when heated by the heater, **characterised in that** the rigid body (24) and the receiving groove (20) are so configured that, when the injection mould is used, the rigid body may expand, as a result of heating thereof, in such a way that a gap (S) between outer surface (38) and groove surface (37) present when the arrangement is in the cold state disappears when a nominal temperature is reached in favour of a snug fit of the circumferential surface (38) against the groove surface (37).

2. An injection mould according to claim 1, **characterised in that** the outer cross-sectional contour (KA) of the rigid body (24) is substantially similar to the cross-sectional contour (KI) of the groove surface (37).

3. An injection mould according to claim 2, **characterised in that** the outer cross-sectional contour (KA) of the rigid body (24) comprises, in the zone adjacent the groove bottom (21) of the receiving groove (20), a rounded portion (25) adjoined on both sides by a straight portion (26) extending perpendicularly to the adjacent main face (B) of the hot runner manifold block (10).

4. An injection mould according to claim 3, **characterised in that** the rounded portion (25) is a semicircle.

5. An injection mould according to any one of claims 1 to 4, **characterised in that** the outer cross-sectional contour (KA) of the rigid body (24) is different relative to the cross-sectional contour (KI) of the groove surface (37).

6. An injection mould according to any one of claims 1 to 5, **characterised in that** the outer cross-sectional contour (at 39) of the heater (18) is substantially similar to the cross-sectional contour (at 40) of the receiving channel (27).

7. An injection mould according to any one of claims 1 to 4, **characterised in that** the outer cross-sectional contour (at 39) of the heater (18) is different relative to the cross-sectional contour (at 40) of the receiving channel (27).

8. An injection mould according to any one of claims 1 to 7, **characterised in that** the rigid body (24) consists of individual rigid partial bodies (24A, 24B).

9. An injection mould according to claim 8, **characterised in that** the partial bodies constitute axial portions (at 44).

10. An injection mould according to claim 9, **characterized in that** partial bodies in the form of axial portions (at 44) succeed one another directly in the longitudinal direction of the receiving groove (20).

11. An injection mould according to claim 9, **characterised in that** partial bodies in the form of axial portions succeed one another with axial spacing in the longitudinal direction of the receiving groove (20).

12. An injection mould according to any one of claims 8 to 11, **characterised in that** the cross-section of the rigid body (24) is composed of partial cross-sections, for example segment-like partial cross-sections, of individual rigid partial bodies (24A, 24B).

13. An injection mould according to claim 12, **characterised in that** the partial bodies (24A, 24B) comprising segment-like partial cross-sections may engage form-fittingly in one another with axial joint faces (at F).

14. An injection mould according to any one of claims 1 to 13, **characterised in that** the rigid body (24) comprises in its zone adjacent the opening (22) of the receiving groove (20) an axial slit (33) extending parallel to the longitudinal axis of the receiving groove (20).

15. An injection mould according to any one of claims 1 to 14, **characterised in that** the axial slit (33) opens into the receiving channel (27).

16. An injection mould according to any one of claims 1 to 15, **characterised in that** the rigid body (24) comprises a materially cohesive component or a plurality of partial bodies (24A, 24B), wherein the cohesive component or the partial bodies (24A, 24B) are in each case arranged over the entire length of the heater (18).

17. An injection mould according to any one of claims 1 to 16, **characterised in that** the rigid body (24) consists of copper or of a copper alloy.

18. An injection mould according to any one of claims 1 to 17, **characterised in that** the rigid body (24) consists of copper beryllium, bronze or brass.

19. An injection mould according to any one of claims 1 to 18, **characterised in that** the rigid body (24) consists of molybdenum.

20. An injection mould according to any one of claims 8 to 19, **characterised in that** partial bodies of the rigid body (24) consist of metals of different thermal conductivities.

21. An injection mould according to any one of claims 1 to 20, **characterised in that** the heater constitutes an electrical tubular heater (18).

22. An injection mould according to claim 21, **characterised in that** the insulating material surrounding the electrical heating coil (29, 30) of the tubular heater (18), such as for example magnesium oxide powder (31), is precompacted prior to insertion of the tubular heater (18) into the receiving channel (27) of the rigid body (24).

23. An injection mould according to claim 21, **characterised in that**, after insertion of the tubular heater (18) into the receiving channel (27) of the rigid body (24) by reduction of the rigid body, for example by stretching or by rolling, the insulating material surrounding the heating coil (29, 30) of the tubular heater (18), such as for example magnesium oxide powder (31), is compacted together with the reduction of the rigid body (24).

24. An injection mould according to any one of claims 1 to 23, **characterised in that** the rigid body (24) containing the heater (18) is bent in accordance with the profile of the receiving groove (20).

25. An injection mould according to any one of claims 1 to 24, **characterised in that** the two groove side walls (23) of the receiving groove (20) serve as fastening means for the rigid body (24), by the groove side walls (23) being inclined towards one another such that the cross-sectional contour (KI) of the receiving groove (20) is undercut slightly relative to the cross-sectional contour (KA) of the rigid body (24), in such a way that, on insertion approximately parallel to the longitudinal axis of the receiving groove (20), the rigid body (24) containing the heater (18) is fixed in the latter by snap-latching or by clamping fit.

26. An injection mould according to any one of claims 1 to 25, **characterised in that**, after insertion of the rigid body (24) containing the heater (18) into the receiving groove (20), the rigid body (24) projects in its zone (41) adjacent the opening (22) of the receiving groove (20) relative to the adjacent main face (B) of the hot runner manifold block (10) by a protruding portion (Ü).

27. An injection mould according to claim 26, **characterised in that** the protruding portion (Ü) is subsequently ground until it is flush with the adjacent main face (B) of the hot runner manifold block (10).

28. An injection mould according to any one of claims 1 to 27, **characterised in that** the rigid body (24) containing the tubular heater (18) is set back in its zone (41) adjacent the opening (22) of the receiving groove (20) relative to the adjacent main face (B) of the hot runner manifold block.

29. An injection mould according to any one of claims 1 to 28, **characterised in that** the cross-sectional contour (KI) of the receiving groove (20) has no undercut relative to the cross-sectional contour (KA) of the rigid body (24).

30. An injection mould according to claim 29, **characterised in that** the cross-sections of receiving groove (20) and rigid body (24) widen conically towards the opening (22) of the receiving groove (20).

31. An injection mould according to claim 30, **characterised in that** the conical widening is defined by straight lines, which in each case form an angle of less than 7° with a perpendicular dropped from the main face (B) of the hot runner manifold block (10).

32. An injection mould according to any one of claims 1 to 31, **characterised in that** the rigid body (24) is held in the receiving groove (30) by means of areas (36) of the groove walls (23) deformed in the manner of notches or by means of studs (35) arranged in the hot runner manifold block (10).

33. An injection mould according to any one of claims 1 to 32, **characterised in that** the rigid body (24) is held in the receiving groove (20) by means of a cover plate (34) engaging over the adjacent main face (B) of the hot runner manifold block (10).

34. An injection mould according to any one of claims 1 to 33, **characterised in that** the rigid body (24) consisting in particular of copper or of a copper alloy is chemically nickel-plated.

## Revendications

1. Outil de moulage par injection pour la transformation de masses plastiques, en particulier outil de moulage par injection pour matière synthétique, avec un bloc à canal chaud (10), présentant, sur au moins une face principale (B), au moins une rainure de logement (20) pour chaque fois au moins un corps chauffant (18) s'étendant le long de la rainure de logement (20), corps chauffant auquel est associé un moyen de maintien conducteur de la chaleur, ayant la forme d'un corps (24) rigide, qui, d'une part, est en appui, par sa face extérieure (38), sur la face de rainure (37) et qui, d'autre part, est en appui, par sa face intérieure (40), sur le corps chauffant (18), sachant que le moyen de maintien est formé par au moins un corps rigide (24) métallique, s'étendant le long de la rainure de logement (20), séparé du bloc de canal chaud (10), le corps formant, par sa face intérieure (40), un canal de logement (27), dans lequel le corps chauffant (18) est susceptible d'être inséré, ou bien qui doit être disposé, avec son canal de logement (27), autour du corps chauffant (18), des moyens de fixation (23,23; 34,35,36) étant prévus pour la fixation du corps rigide (24) dans la rainure de logement (20), et le corps rigide (24) présentant une dilatation thermique supérieure à celle du bloc de canal chaud et, en cas de chauffage, venant en appui, par le corps chauffant, sur la face de rainure, **caractérisé en ce que** le corps rigide (24) et la rainure de logement (20) sont configurés de manière que, en cas d'utilisation de l'outil de moulage par injection, du fait de l'échauffement du corps rigide, ce dernier peut se dilater, de manière qu'un intervalle (S), existant entre la face extérieure (38) et la face de rainure (37) lorsque l'agencement est à l'état froid, disparaisse à l'atteinte d'une température de consigne, en faveur de l'obtention d'un appui sur toute la surface d'enveloppe (38) sur la face de rainure (37).

2. Outil de moulage par injection selon la revendication 1, **caractérisé en ce que** le contour extérieur de section transversale (KA) du corps rigide (24) est pratiquement analogue au contour de section transversale (KI) de la surface de rainure (37).

3. Outil de moulage par injection selon la revendication 2, **caractérisé en ce que** le contour extérieur de section transversale (KA) du corps rigide (24) présente, dans sa zone voisine du fond de rainure (21) de la rainure de logement (20), un arrondi (25) auquel, sur chacun des deux côtés, se raccorde une droite (26), s'étendant particulièrement par rapport à la face principale (B) voisine du bloc de canal chaud (10).

4. Outil de moulage par injection selon la revendication 3, **caractérisé en ce que** l'arrondi (25) est un demi-cercle.

5. Outil de moulage par injection selon l'une des revendications 1 à 4, **caractérisé en ce que** le contour extérieur de section (KA) du corps rigide (24) est différent du contour de section transversale (KI) de la surface de rainure (37).

6. Outil de moulage par injection selon l'une des revendications 1 à 5, **caractérisé en ce que** le contour extérieur de section transversale (en 39) du corps chauffant (18) est pratiquement analogue au contour de section transversale (en 40) du canal de logement (27).

7. Outil de moulage par injection selon l'une des revendications 1 à 4, **caractérisé en ce que** le contour extérieur de section transversale (en 39) du corps chauffant (18) est différent du contour de section transversale (en 40) du canal de logement (27).

8. Outil de moulage par injection selon l'une des revendications 1 à 7, **caractérisé en ce que** le corps rigide (24) est formé de corps partiels (24a,24b) rigides individuels.

9. Outil de moulage par injection selon la revendication 8, **caractérisé en ce que** des corps partiels forment des tronçons axiaux (en 44).

10. Outil de moulage par injection selon la revendication 9, **caractérisé en ce que** des corps partiels, réalisés sous forme de tronçons axiaux (en 44), se suivent directement les uns les autres, dans la direction longitudinale de la rainure de logement (20).

11. Outil de moulage par injection selon la revendication 9, **caractérisé en ce que** des corps partiels, réalisés sous forme de tronçons axiaux, se suivent les uns les autres avec un espacement axial, dans la direction longitudinale de la rainure de logement (20).

12. Outil de moulage par injection selon l'une des revendications 8 à 11, **caractérisé en ce que** la section transversale du corps rigide (24) est composée de sections transversales partielles, par exemple de sections transversales partielles, du genre de segments, de corps partiels (24a,24b) individuels.

13. Outil de moulage par injection selon la revendication 12, **caractérisé en ce que** des corps partiels (24A,24B), présentant des sections transversales partielles du genre de segments, s'engagent les uns dans les autres avec une liaison à ajustement de forme, avec des faces de jointoiement axiales (en F).

14. Outil de moulage par injection selon l'une des revendications 1 à 13, **caractérisé en ce que** le corps rigide (24), dans sa zone voisine de l'ouverture (22) de l'ouverture de logement (20), présente une fente axiale (33), s'étendant parallèlement à l'axe longitudinal de la rainure de logement (20).

15. Outil de moulage par injection selon l'une des revendications 1 à 14, **caractérisé en ce que** la fente axiale (33) débouche dans le canal de logement (27).

16. Outil de moulage par injection selon l'une des revendications 1 à 15, **caractérisé en ce que** le corps rigide (24) présente un composant, assemblé par une liaison par la matière, ou bien présente plusieurs corps partiels (24A,24B), le composant assemblé ou les corps partiels (24A,24B) étant chacun disposés sur la longueur globale du corps chauffant (18).

17. Outil de moulage par injection selon l'une des revendications 1 à 16, **caractérisé en ce que** le corps rigide (24) est formé en cuivre, ou bien en un alliage de cuivre.

18. Outil de moulage par injection selon l'une des revendications 1 à 17, **caractérisé en ce que** le corps rigide (24) est formé cuivre-beryllium, en bronze ou en laiton.

19. Outil de moulage par injection selon l'une des revendications 1 à 18, **caractérisé en ce que** le corps rigide (24) est formé de molybdène.

20. Outil de moulage par injection selon l'une des revendications 8 à 19, **caractérisé en ce que** les corps partiels du corps rigide (24) sont formés en des métaux ayant une conductivité thermique différente.

21. Outil de moulage par injection selon l'une des revendications 1 à 20, **caractérisé en ce que** le corps chauffant forme un corps chauffant tubulaire (18) électrique.

22. Outil de moulage par injection selon la revendication 21, **caractérisé en ce que** le matériau isolant, entourant l'enroulement chauffant (29, 30) électrique du corps chauffant tubulaire (18), tel que, par exemple, de la poudre d'oxyde de magnésium (31), est précomprimé avant insertion du corps chauffant tubulaire (18) dans le canal de logement (27) du corps rigide (24).

23. Outil de moulage par injection selon la revendication 21, **caractérisé en ce que** le matériau isolant, entourant les enroulements chauffants (29, 30) du corps chauffant tubulaire (18), tel que, par exemple, de la poudre d'oxyde de magnésium (31), est comprimé après insertion du corps chauffant tubulaire (18) dans le canal de logement (27) du corps rigide (24), par une réduction du corps rigide, par exemple, par un étirement ou par un laminage, conjointement avec la réduction du corps rigide (24).

24. Outil de moulage par injection selon l'une des revendications 1 à 23, **caractérisé en ce que** le corps rigide (24) contenant le corps chauffant (18) est cintré, de manière correspondante à l'allure de la rainure de logement (20).

25. Outil de moulage par injection selon l'une des revendications 1 à 24, **caractérisé en ce que** les deux parois latérales de rainure (23) de la rainure de logement (20) servent de moyens de fixation pour le corps rigide (24), **en ce que** les parois latérales de rainure (23) sont inclinées l'une par rapport à l'autre, de manière que le contour de section transversale (KI) de la rainure de logement (20) présente une légère contre-dépouille par rapport au contour de section transversale (KA) du corps rigide (24), de manière que le corps rigide (24) contenant le corps chauffant (18), lors de l'insertion, soit fixé à peu près parallèlement par rapport à l'axe longitudinal de la rainure de logement (20), avec encliquetage à déclic dans ce dernier, ou bien par une liaison par serrage.

26. Outil de moulage par injection selon l'une des revendications 1 à 25, **caractérisé en ce que**, après insertion du corps rigide (24) contenant le corps chauffant (18), dans la rainure de logement (20), le corps rigide (24) est en saillie, de la valeur d'un dépassement (Ü), par sa zone (41) voisine de l'ouverture (22) de la rainure de logement (20), par rapport à la face principale (B) voisine du bloc de canal chaud (10).

27. Outil de moulage par injection selon la revendication 26, **caractérisé en ce que** le dépassement (Ü) est rendu plat par meulage-rectification, jusqu'à obtenir l'affleurement de surface avec la face principale (B) voisine du bloc de canal chaud (10).

28. Outil de moulage par injection selon l'une des revendications 1 à 27, **caractérisé en ce que** le corps rigide (24) contenant le corps chauffant tubulaire (18) est en retrait, par sa zone (41) voisine de l'ouverture (22) de la rainure de logement (20), par rapport à la face principale (B) voisine du bloc de canal chaud.

29. Outil de moulage par injection selon l'une des revendications 1 à 28, **caractérisé en ce que** le contour de section transversale (KI) de la rainure de logement (20) est exempt de contre-dépouille par rapport au contour de section transversale (KA) du corps rigide (24).

30. Outil de moulage par injection selon la revendication 29, **caractérisé en ce que** les sections transversales, de la rainure de logement (20) et du corps rigide (24), sont élargies de façon conique en direction de l'ouverture (22) de la rainure de logement (20).

31. Outil de moulage par injection selon la revendication 30, **caractérisé en ce que** l'élargissement conique est limité par des droites, formant chacune, avec une verticale tombant de la face principale (B) du bloc de canal chaud (10), un angle inférieur à 7°.

32. Outil de moulage par injection selon l'une des revendications 1 à 31, **caractérisé en ce que** le corps rigide (24) est maintenu, au moyen de zones (36), déformées en entailles, des parois de rainure (23), ou au moyen de vis à tige (35), disposées dans le bloc de canal chaud (10), dans la rainure de logement (30).

33. Outil de moulage par injection selon l'une des revendications 1 à 32, **caractérisé en ce que** le corps rigide (24) est maintenu dans la rainure de logement (20), au moyen d'une plaque de couverture (34), entourant la face principale (B) voisine du bloc de canal chaud (10).

34. Outil de moulage par injection selon l'une des revendications 1 à 33, **caractérisé en ce que** le corps rigide (24), constitué en particulier de cuivre ou d'un alliage de cuivre, est nickelé par voie chimique.
